# EUROPÄISCHE PATENTSCHRIFT

(11) **EP 3 833 841 B1**
(45) Veröffentlichungstag und Bekanntmachung des Hinweises auf die Patenterteilung: **25.10.2023**
(21) Anmeldenummer: 19756128.5
(22) Anmeldetag: 07.08.2019
(51) Int. Cl.: E06B 3/50, F16D 41/10

(54) **SPINDELANTRIEB MIT RÜCKLAUFSPERRGETRIEBE**
SPINDLE DRIVE HAVING A REVERSE-LOCK TRANSMISSION
MÉCANISME D'ENTRAÎNEMENT À ARBRE AYANT UN DISPOSITIF AUTOMATIQUE DE BLOCAGE

(30) Priorität: 08.08.2018 DE 202018104556 U
(43) Veröffentlichungstag der Anmeldung: 16.06.2021
(73) Patentinhaber: D+H Mechatronic AG, 22949 Ammersbek (DE)
(72) Erfinder: HAGEMANN, Ralf, 21224 Rosengarten (DE)
(74) Vertreter: Raffay & Fleck
(86) Internationale Anmeldenummer: PCT/EP2019/071189
(87) Internationale Veröffentlichungsnummer: WO 2020/030681

(56) Entgegenhaltungen:
- EP-A1- 3 164 283
- EP-A1- 3 199 742
- EP-B1- 3 164 283
- WO-A1-2011/037023
- DE-A1-102014 212 863
- JP-A- 2007 040 343
- JP-A- 2007 192 314
- US-A1- 2003 006 120
- US-A1- 2005 155 444
- US-A1- 2015 126 326
- TOOTEN K H ET AL: "STAND DER ENTWICKLUNG UND EINSATZMOEGLICHKEITEN VON LASTMOMENTSPERREN", ANTRIEBSTECHNIK, VEREINIGTE FACHVERLAGE, MAINZ, DE, vol. 32, no. 1, 1 January 1993 (1993-01-01), pages 57-61, XP000338549, ISSN: 0722-8546

## Beschreibung

Die Erfindung betrifft einen Spindelantrieb mit den Merkmalen des Oberbegriffs des Anspruchs 1. Sie betrifft ein Lamellenfenster oder eine Lamellenklappe mit einem Spindelantrieb zum Bewegen von Lamellenelementen.

Spindelantriebe sind in ganz unterschiedlichen Anwendungen bekannt. Sie dienen allgemein dazu eine rotatorische Antriebsbewegung in eine Linearbewegung umzusetzen. Neben manuellen Spindelantrieben kommen insbesondere auch motorisch angetriebene Spindelantriebe zum Einsatz, wobei solche motorisch angetriebenen Spindelantriebe Gegenstand der vorliegenden Erfindung sind.

Aus der US 2005/155444 A1 ist ein Linear-Aktuator mit einer von einem Antriebsmotor rotierend antreibbaren Gewindespindel und einer mit der Gewindespindel in Eingriff stehenden Spindelmutter bekannt, wobei bevorzugt durch Rotation der Spindelmutter axial entlang der Gewindespindel die Gewindespindel relativ zur Spindelmutter verlagerbar ist, wobei ein zwischen einer Antriebswelle des Antriebsmotors und der Gewindespindel angeordneten Rücklaufsperrgetriebe mit einem Antriebselement und einem Abtriebselement, wobei Antriebselement und Abtriebselement konzentrisch zu einer Rotationsachse und um diese Rotationsachse relativ zueinander um einen Winkelbereich verdrehbar innerhalb einer diese beiden Elemente umgebenden, eine in einer senkrecht zu der Rotationsachse liegenden Schnittebene einen kreisförmigen Querschnitt auf-weisende Innenfläche aufweisenden, ebenfalls zu der Rotationsachse konzentrisch angeordneten Führung angeordnet sind, wobei an einem ersten der Elemente Antriebselement und Abtriebselement wenigstens ein radial vorstehender Mitnehmervorsprung ausgebildet ist, wobei in einem zweiten der Elemente Antriebselement und Abtriebselement eine Mitnehmernut vorgesehen ist, wobei der Mitnehmervorsprung in die Mitnehmernut hinein-ragt, wobei die Mitnehmernut in einer auf die Rotationsachse bezogenen Umfangsrichtung gesehen eine Nutenbreite aufweist, die um ein erstes Maß größer ist als eine Breite des Mitnehmervorsprungs in der Umfangsrichtung, wobei in dem den Mitnehmervorsprung aufweisenden Element wenigstens ein Ausschnitt vorgesehen ist, in dem wenigstens ein Wälzkörper angeordnet ist, das in dem Ausschnitt zwischen der Innenfläche der Führung und einer Oberfläche des die Mitnehmernut aufweisenden Elements angeordnet liegt, wobei das den Mitnehmervorsprung aufweisende Element von dem Mitnehmervorsprung bis zu einem dem Mitnehmervorsprung entlang der Umfangsrichtung zugewandten Rand des Ausschnitts eine ein zweites Maß betragende Erstreckung aufweist.

Mit motorisch angetriebenen Spindelantrieben bewegte Elemente müssen häufig auch entgegen anliegender Lasten oder einer Rückstell- oder Gegenkraft in einer Stellposition gehalten werden. Dazu müssen Rückstellkräfte aufgenommen werden, was in den bekannten Spindelantrieben in der Regel durch eine Hemmung des Antriebsmotors geleistet wird.

Ein für den Anmelder besonders im Fokus stehendes Anwendungsfeld derartiger Spindelantriebe liegt in dem Bewegen von Verschlusselementen für Fenster und/oder Klappen, insbesondere von Lamellenelementen von Lamellenfenstern oder Lamellenklappen. Für solche Bauteile, zum Beispiel in Fassaden eingesetzte Lamellenfenster, die über zwei oder mehr um jeweils parallel zueinander verlau -fende Drehachsen verdrehbar in einem Rahmen angeordnete Fensterlamellen verfügen, werden regelmäßig Spindelantriebe eingesetzt, um ein Schubelement motorisch getrieben zu verschieben, welches Schubelement Teil eines Getriebes ist, an welches die Fensterlamellen gekoppelt sind, um diese entsprechend synchronisiert zu verdrehen für ein Öffnen bzw. Schließen der Fensteröffnung.

Insbesondere auch da entsprechende Lamellenfenster mit immer größeren Dimensionen gebaut werden und damit die Fensterlamellen ebenfalls großflächiger und somit mit höherem Eigengewicht gebaut werden und zugleich mehr Angriffsfläche für auflastende Windlasten bieten, sind die von den Spindelantrieben beim Halten der Lamellenelemente in einer nicht geschlossenen Position aufzufangenden Rückstellkräfte und -momente gegenüber früheren Anforderungen größer geworden. Diese können von den üblicherweise verwendeten Antriebsmotoren oft nicht mehr sicher kompensiert werden. Entsprechend müssen dann in der Leistung größer ausgelegte Antriebsmotoren verwendet werden oder es müssen andere Maßnahmen ergriffen werden, die Rückstellkräfte und -momente abzufangen.

Diesem Problem widmet sich die vorliegende Erfindung. Ihr liegt die Aufgabe zugrunde, einen Spindelantrieb derart weiterzubilden, dass auftretende Rückstellkräfte und Rückstellmomente besser und insbesondere ohne Belastung des Antriebsmotors abgefangen werden können.

Gelöst wird diese Aufgabe mit einem Spindelantrieb mit den Merkmalen des Schutzanspruchs 1.Vorteilhafte Weiterbildungen eines solchen erfindungsgemäßen Spindelantriebs sind in den Ansprüchen 2 bis 6 bezeichnet. In einem weiteren Aspekt wird mit der Erfindung auch ein Lamellenfenster oder eine Lamellenklappe angegeben, das bzw. die zum Bewegen ihrer Lamellenelemente einen wie mit dieser Erfindung angegebenen Spindelantriebs aufweist.

Erfindungsgemäß hat ein Spindelantrieb, der insbesondere aber nicht nur zum motorisch getriebenen Bewegen von Lamellenelementen von Lamellenfenstern oder Lamellenklappen eingesetzt werden kann, einen Antriebsmotor und eine von diesem rotierenden antreibbare Gewindespindel. Weiterhin ist eine mit der Gewindespindel in Eingriff stehende, durch Rotation der Gewindespindel axial entlang der Gewindespindel verlagerbare Spindelmutter Bestandteil des Spindelantriebs. Ein solcher - in den vorstehend genannten Merkmalen allgemein bekannter - Spindelantrieb wird nun erfindungsgemäß mit einem zwischen einer Antriebswelle des Antriebsmotors und der Gewindespindel angeordneten Rücklaufsperrgetriebe versehen. Dieses Rücklaufsperrgetriebe dient dazu, zu verhindern, dass eine auf der Spindelmutter lastende und auf die Gewindespindel übertragene Rückstellkraft bzw. ein Rückstellmoment bis in den Antriebsmotor zurückgeführt wird. Das Rücklaufsperrgetriebe entkoppelt also den Antriebsmotor von einer solchen Rückstellkraft bzw. einem solchen Rückstellmoment, sodass diese Kraft bzw. dieses Moment über zum Beispiel einen Gehäuseabschnitt, an dem das Rücklaufsperrgetriebe festgelegt ist, auf ein solches Gehäuse und weitere mit dem Gehäuse verbundene Strukturen übertragen und dort aufgefangen werden kann.

Das erfindungsgemäße Rücklaufsperrgetriebe ist insbesondere bidirektional wirksam, d.h. es sperrt sowohl gegen eine über die Gewindespindel in Richtung des Antriebsmotors wirkende Kraft bzw. ein Moment in einer linksdrehenden Richtung der Gewindespindel wie auch in einer rechtsdrehenden Richtung der Gewindespindel.

Das Rücklaufsperrgetriebe ist dazu erfindungsgemäß mit folgenden Elementen gebildet und wie folgt aufgebaut:
Es enthält ein Antriebselement und ein Abtriebselement. Antriebselement und Abtriebselement sind konzentrisch zu einer Rotationsachse und um diese Rotationsachse relativ zueinander um einen Winkelbereich verdrehbar innerhalb eines diese beiden Elemente umgebenden, eine in einer senkrecht zu der Rotationsachse liegenden Schnittebene einen kreisförmigen Querschnitt aufweisende Innenfläche aufweisenden, ebenfalls zu der Rotationsachse konzentrisch angeordneten Führung angeordnet. Die Rotationsachse kann dabei zum Beispiel mit der Längs- und Rotationsachse der Gewindespindel zusammenfallen. Sie kann zu dieser aber auch versetzt angeordnet sein, wenn sich an das Abtriebselement des Rücklaufsperrgetriebes eine weitere Getriebeanordnung anschließt, mit der der Rotationsantrieb und das Drehmoment schließlich auf die Gewindespindel übertragen wird. In dem Rücklaufsperrgetriebe des erfindungsgemäßen Spindelantriebs ist weiterhin an einem ersten der Elemente, Antriebselement und Abtriebselement, wenigstens ein radial vorstehender Mitnehmervorsprung ausgebildet, und ist in einem zweiten der Elemente, Antriebselement und Abtriebselement, eine Mitnehmernut vorgesehen. Insbesondere kann dabei das Antriebselement den Mitnehmervorsprung aufweisen, das Abtriebselement die Mitnehmernut. Der Mitnehmervorsprung ragt in die Mitnehmernut hinein, sodass die beiden Elemente Antriebselement und Abtriebselement hierdurch miteinander rotatorisch gekoppelt sind. Die Mitnehmernut hat in einer auf die Rotationsachse bezogenen Umfangsrichtung gesehen eine Nutenbreite, die um ein erstes Maß größer ist als eine Breite des Mitnehmervorsprungs in der Umfangsrichtung. Dies bewirkt, dass zwischen den beiden Elementen Antriebselement und Abtriebselement ein durch dieses erste Maß bestimmtes Winkelspiel für eine relative Verdrehung der beiden Elemente zueinander gegeben ist.

Weiterhin ist in dem den Mitnehmervorsprung aufweisenden Element, zum Beispiel also dem Antriebselement, wenigstens ein Ausschnitt vorgesehen, in dem wenigstens ein Wälzkörper angeordnet ist, das in dem Ausschnitt zwischen der Innenfläche der Führung und einer Oberfläche des die Mitnehmernut aufweisenden Elements, zum Beispiel des Abtriebselements, angeordnet liegt. Ein solches Wälzkörper kann zum Beispiel eine Kugel, eine Zylinderwalze, eine Kegelwalze oder dergleichen bekanntes Wälzkörper sein.

Weiterhin weist erfindungsgemäß das den Mitnehmervorsprung aufweisende Element von dem Mitnehmervorsprung bis zu einem dem Mitnehmervorsprung entlang der Umfangsrichtung zugewandten Rand des Ausschnitts eine ein zweites Maß betragende Erstreckung auf. Hierdurch wird gleichsam ein "Arm" gebildet, der bei einer Relativbewegung von Antriebselement und Abtriebselement durch relative Verdrehung zueinander entlang der Oberfläche des die Mitnehmernut aufweisenden Elements verschoben wird und die Oberfläche in diesem Bereich je nach der Relativposition der beiden Elemente zueinander überdecken oder freigeben kann.

Ferner weist die Oberfläche des die Mitnehmernut aufweisenden Elements in einem von dem Ausschnitt überstrichenen Bereich in einem mittleren Abschnitt in einer Ebene quer zu der Rotationsachse einen kreisabschnittförmigen und zu dem Verlauf der Innenfläche konzentrischen Verlauf auf und hat dort einen konstanten ersten Abstand zu der Innenfläche. "Von dem Ausschnitt überstrichener Bereich" bedeutet hierbei ein Bereich der Oberfläche des die Mitnehmernut aufweisenden Elements, der jedenfalls in einer der möglichen relativ zueinander verdrehten Positionen zwischen Abtriebselement und Antriebselement in radialer Richtung gesehen unterhalb des Ausschnitts liegt.

Weiterhin weist die Oberfläche des die Mitnehmernut aufweisenden Elements in dem von dem Ausschnitt überstrichenen Bereich in Umfangsrichtung zu beiden Seiten des mittleren Abschnitts gelegene, äußere Abschnitte auf, in denen die Oberfläche des die Mitnehmernut aufweisenden Elements von dem kreisförmigen Verlauf abweicht und einen zweiten Abstand zu der Innenfläche aufweist, der geringer ist als der erste Abstand. Der Wälzkörper hat einen Rolldurchmesser, der kleiner ist als oder genauso groß ist wie der erste Abstand, der jedoch größer ist als der zweite Abstand. Hierdurch kann sich der Wälzkörper, wenn er in dem mittleren Abschnitt befindlich ist, frei bewegen bzw. behindert eine relative Bewegung zwischen Antriebselement und Abtriebselement nicht und auch nicht eine Rotation der beiden Elemente gemeinsam relativ zu der Führung. Gerät der Wälzkörper jedoch in einen der äußeren Abschnitte, so wird durch die Verringerung des Abstandes zwischen der Oberfläche des die Mitnehmernut aufweisenden Elements und der Innenfläche der Führung der Wälzkörper dort für eine Verkeilung sorgen, die eine weitere Rotation des Systems (der beiden Elemente Antriebselement und Abtriebselement gemeinsam relativ zu der Führung) verhindert. Dieser Umstand wird nun genutzt, um das Rücklaufsperrgetriebe zu blockieren, wenn der Antriebsmotor nicht läuft, der Spindelantrieb also nicht bewegt wird, jedoch ein Rückstellmoment bzw. einer Rückstellkraft anliegt. Diese führt nämlich zu einer Verdrehung des Abtriebselements und damit zu einer relativen Verlagerung in einer solchen Weise, dass der mindestens eine Wälzkörper in einen der äußeren Abschnitte gedrängt wird und dort blockiert. Um allerdings bei einem gewünschten Antrieb das Rücklaufsperrgetriebe zu entsperren, ist vorgesehen, dass das den Mitnehmervorsprung aufweisende Element, wenn der Mitnehmervorsprung an einer dem Rand des Ausschnitts zugewandten Seitenfläche der Mitnehmernut anschlägt, den zu dieser Seitenflächen gelegenen äußeren Abschnitt überdeckt. So wird dann der Wälzkörper davon abgehalten, in diesen Abschnitt zu gelangen und wird von dem angetriebenen Element dann in dem mittleren Abschnitt "vor sich her getrieben", ohne dass er eine Klemmwirkung herbeiführt.

Das besonders gestaltete und wie vorstehend beschriebene Rücklaufsperrgetriebe des Erfindung gemessen Spindelantriebs zeichnet sich insbesondere dadurch aus, dass es keine aktiven zusätzlichen Stellelemente benötigt, dass keine Federn oder sonstigen Spannelemente benötigt werden, sondern dass es mit wenigen Bestandteilen und sehr robust aufgebaut ist und dabei zugleich eine sehr zuverlässige Sperrwirkung gegen Rückstellkräfte bzw. Rückstellmomente gewährleistet. Wenn zum Beispiel die Führung derart starr an entsprechend tragfähigen Bauteilen angebunden ist, die Rückstellkräfte oder Rückstellmomente abfangen können, so werden diese Kräfte und Momente durch das Rücklaufsperrgetriebe entsprechend an solche Bauteile übertragen, ohne dass der Antriebsmotor eine Belastung erfährt.

Ein erfindungsgemäß in dem Spindelantrieb integriertes Rücklaufsperrgetriebe hat gerade auch dann Vorteile, wenn der Spindelantrieb für den Einbau in einem Fenster oder einer Klappe, insbesondere einem Lamellenfenster oder einer Lamellenklappe, zum Bewegen von Flügel- oder Lamellenelementen vorgesehen ist. Denn dann bietet der Spindelantrieb durch seine durch das Rücklaufsperrgetriebe erreichte hohe Selbsthemmung einen besonders guten Schutz gegen ein Aufhebeln der Flügel- oder Lamellenelemente, also einen guten Einbruchschutz.

Ein weiterer Vorteil gegenüber bisher bekannten Spindelantrieben, bei denen, um eine erforderliche hohe Selbsthemmung zu erreichen, häufig Gewindespindeln mit einem geringen Wirkungsgrad verwendet werden, liegt in einer anderen Möglichkeit der Auslegung und Dimensionierung des Spindelantriebs. Wo bei den bekannten Spindelantreiben mit geringem Wirkungsgrad vorgeschaltete Motorgetriebeeinheiten mehr Leistung abgeben und dementsprechend größer dimensioniert werden müssen, erlaubt das erfindungsgemäß vorgesehene Rücklaufsperrgetriebe die Verwendung von Gewindespindeln mit hohem Wirkungsgrad, welche wiederum eine Baugrößen- und Kostenersparnis der Motorgetriebeeinheit ermöglichen. So können dann durch eine erreichbare höhere Energieeffizienz auch Netzteile, die die Netzspannung auf eine Schutzkleinspannung des Motors heruntertransformieren und sich in der Regel im Antrieb integriert oder außerhalb des Antriebs befinden, kleiner und damit kostengünstiger dimensioniert werden. Dieses trifft ebenso auf Stromversorgungskabel und elektronische-/ elektromechanische Komponenten sowie Netzersatzanlagen zu.

Bei dem erfindungsgemäßen Aufbau kann z.B. das Antriebselement außen, also zu der Führung hin gelegen, um das Abtriebselement herum angeordnet sein. Wie bereits erwähnt, kann auch dann das Antriebselement den oder die Mitnehmervorsprung / -vorsprünge, das Abtriebselement die Mitnehmernut(en) aufweisen.

Mit besonderem Vorteil kann in dem äußeren Abschnitten der zweite Abstand mit zunehmender Entfernung vom mittleren Abschnitt abnehmen. Dies führt zu einer Art keilförmigen Verlauf des sich so weiter verjüngenden Zwischenraums zwischen Oberfläche des die Aufnahmenut(en) aufweisenden Elements und der innenliegenden Oberfläche der Führung, damit zu einer steigenden Klemm- und Keilwirkung bei einer weiteren relativen Verdrehung des Ensembles aus Antriebselement und Abtriebselement gegenüber der Führung. Somit verstärkt sich die Klemmwirkung bei größeren anliegenden Rückstellkräften, was zu einer weiter zuverlässig gesteigerten Sperrwirkung führt.

Weiterhin kann mit Vorteil vorgesehen sein, dass an dem Antriebselement und dem Abtriebselement an wenigstens zwei, insbesondere an genau drei, der Umfangsrichtung versetzten Positionen an dem ersten der Elemente radial vorstehende Mitnehmervorsprünge und an dem zweiten der Elemente Mitnehmernuten ausgebildet sind, wobei jeweils die Mitnehmervorsprünge und jeweils die Mitnehmernuten gleiche Abmessungen aufweisen und so gestaltet sind, dass in einer ersten relativen Drehposition der beiden Elemente Antriebselement und Abtriebselement alle Mitnehmervorsprünge an ersten, im Drehsinn links gelegenen Seitenflächen der korrespondierenden Mitnehmernuten anschlagen und in einer zweiten, von der ersten verschiedenen relativen Drehpositionen der beiden Elemente Antriebselement und Abtriebselement alle Mitnehmervorsprünge an zweiten, im Drehsinn rechts gelegenen Seitenflächen der korrespondierenden Mitnehmernuten anschlagen, wobei in dem Bereich zwischen den Mitnehmervorsprüngen und dem die Mitnehmervorsprünge aufweisenden Element je ein Ausschnitt mit den vorstehend bestimmten Merkmalen vorgesehen ist und in jedem der Ausschnitte wenigstens ein Wälzkörper angeordnet ist. Eine solche Ausgestaltung mit mehreren Kombinationen aus Mitnehmervorsprung und Mitnehmernut, die umfangseitig verteilt angeordnet sind, führt zu einer gleichmäßigeren Verteilung von zu übertragenden Kräften und entlastet die Konstruktion, erlaubt eine kleiner dimensionierte Auslegung bei dennoch hohen zu übertragenden Drehmomenten und abzufangenden Rückstellkräften bzw. Rückstellmomenten.

Mit Vorteil können in dem wenigstens einen Ausschnitt mehrere, insbesondere zwei, Wälzkörpere vorgesehen sein, die in der Umfangsrichtung gesehen nebeneinander angeordnet sind. Durch eine solche Konstruktion kann eine noch bessere Klemmwirkung im Sperrzustand des Rücklaufsperrgetriebes erreicht werden. Weiterhin kann die Gewindespindel mit Vorteil mit dem Abtriebselement fest verbunden sein, insbesondere mit diesem einstückig ausgebildet sein, und im angetriebenen Zustand und die Rotationsachse rotieren. Diese Ausgestaltung ist einfach, benötigt wenige Bauteile und ist dabei zudem robust.

Weiterhin kann mit Vorteil vorgesehen sein, dass bei dem erfindungsgemäßen Spindelantrieb der von dem Ausschnitt überstrichenen Bereich der Oberfläche des die Mitnehmernut aufweisenden Elements in einer senkrecht zu der Rotationsachse stehenden Querschnittsebene gesehen eine zu einer Mittelachse symmetrische Form aufweist. Dadurch wird erreicht, dass sich das Rücklaufsperrgetriebe in beiden Drehrichtungen gleicher verhält, eine gleiche Sperr- und Übertragungscharakteristik aufweist.

In einem weiteren Aspekt der Erfindung wird ein Lamellenfenster oder eine Lamellenklappe angegeben, welches bzw. welche in einer üblichen Weise in einem gemeinsamen Rahmen um parallele Drehachsen verdrehbar angeordnete Lamellenelemente und ein Antriebsgetriebe aufweist, welches Antriebsgetriebe ein mit den Lamellenelementen zur Umsetzung einer Längsbewegung in Drehbewegungen der Lamellenelemente um deren Drehachsen verbundenes Schubelement aufweist. Das erfindungsgemäße Lamellenfenster bzw. die erfindungsgemäße Lamellenklappe zeichnet sich dadurch aus, dass es bzw. sie einen Spindelantrieb der vorstehend beschriebenen Art aufweist, dessen Spindelmutter zum Antreiben des Schubelements mit dem Schubelement gekoppelt ist.

Weitere Vorteile und Merkmale der Erfindung ergeben sich aus der nachfolgenden Beschreibung eines Ausführungsbeispiels anhand der beigefügten Figuren. Dabei zeigen:

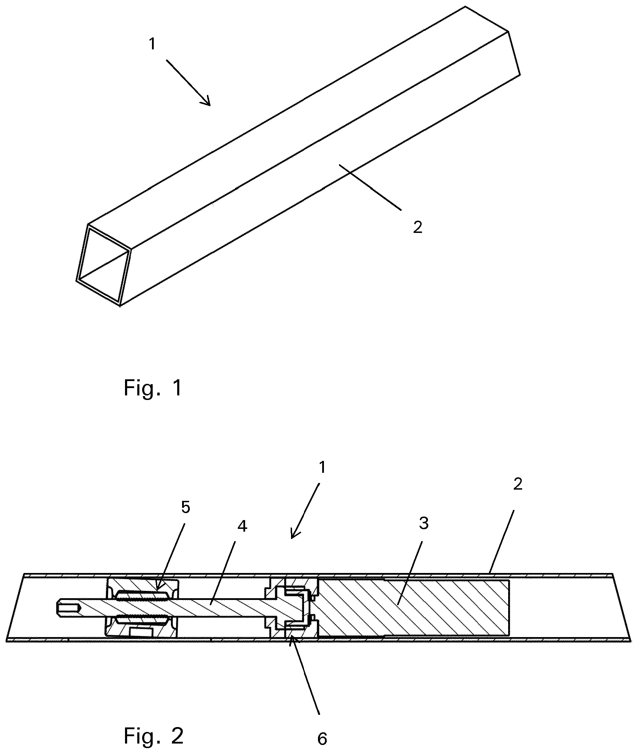

- Fig. 1: eine dreidimensionale Ansicht eines Ausführungsbeispiels eines erfindungsgemäßen Spindelantriebs;
- Fig. 2: eine Längsschnittansicht des in Fig. 1 gezeigten Spindelantriebs;
- Fig. 3: eine teilweise weggeschnittene dreidimensionale Ansicht eines Abschnitts des Spindelantriebs;
- Fig. 4: einen Querschnitt durch das Rücklaufsperrgetriebe des Spindelantriebs; und
- Fig. 5: in vergrößerter Darstellung den in Fig. 4 mit D bezeichneten Ausschnitt der dortigen Ansicht.

In den Figuren ist ein mögliches Ausführungsbeispiel für einen erfindungsgemä-ßen Spindelantrieb gezeigt, der ein erfindungsgemäß gestaltetes Rücklaufsperrgetriebe enthält und der in erfindungsgemäßer Weise in einem Lamellenfenster oder einer Lamellenklappe für den Antrieb der Bewegung der Lamellenelemente (Fensterlamellen oder Klappenlamellen) verwendet werden kann. Die Figuren sind dabei nicht als vollständige Konstruktionszeichnungen und insgesamt maßstabsgerecht aufzufassen. Sie stellen vielmehr Prinzipskizzen dar, die jedoch in denjenigen Aspekten, die die erfindungsgemäß wesentlichen Elemente zeigen, eine detailliertere Darstellung abbilden.

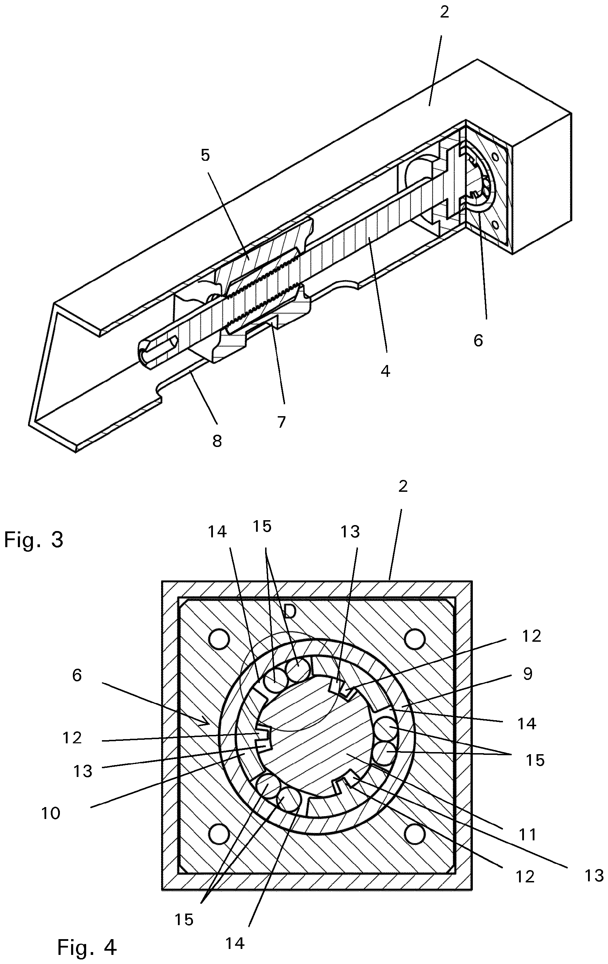

In den Figuren ist ein erfindungsgemäßer Spindelantrieb in der dort gezeigten Ausgestaltungsvariante mit der Bezugsziffer 1 bezeichnet. Der Spindelantrieb 1 weist ein langgestrecktes, rohrförmiges, im Querschnitt rechteckiges Antriebsgehäuse 2 auf, in dem die für den Betrieb und die Funktion des Spindelantriebs 1 wesentlichen Elemente angeordnet sind. Diese wesentlichen Elemente sind im Kern ein Antriebsmotor 3, eine mit dem Antriebsmotor 3 zum rotierenden Antrieb derselben, gegebenenfalls über ein zwischengeschaltetes Übersetzungsgetriebe, verbundene Gewindespindel 4 und eine mit einem darin ausgebildeten Innengewinde auf einem Außengewinde der Gewindespindel 4 geführt laufende Spindelmutter 5. Die Spindelmutter 5 hat eine Anschlussmöglichkeit zum Verbinden mit einem von ihr mitzunehmenden und linear zu bewegenden Element. Hier ist diese Anschlussmöglichkeit durch einen Einschnitt 7 in der Spindelmutter 5 gebildet, in den ein an einem zu bewegenden Element ausgebildeter nockenartiger Rastvorsprung eingeführt und dort für eine Mitnahme in einer Längsrichtung formschlüssig gehalten werden kann. Die Spindelmutter 5 ist dabei so gebildet, dass sie einen dem Innenquerschnitt des Antriebsgehäuses 2 in etwa entsprechenden Außenquerschnitt aufweist, sodass sie durch das Antriebsgehäuse 2 eine Führung erfährt. Erkennbar ist in Figur 3 insbesondere auch, dass das Antriebsgehäuse 2 in einem Abschnitt einen sich in Längsrichtung des Antriebsgehäuses 2 erstreckenden Schlitz 8 aufweist, durch den hindurch der zuvor beschriebene Anschluss eines zu bewegenden Elements geführt und in dem Einschnitt 7 in der Spindelmutter 5 festgelegt werden kann. Über die Länge des Schlitzes 8 kann dann eine Mitnahme des so mit der Spindelmutter 5 verbundenen zu bewegenden Elements, getrieben durch den Spindelantrieb 2 erfolgen.

In diesem allgemeinen Aufbau entspricht der erfindungsgemäße Spindelantrieb 1 dem grundsätzlichen Aufbau üblicher und bekannter Spindelantriebe, wie sie in vielen Anwendungsgebieten eingesetzt werden, um einen motorisch erzeugten Drehantrieb in eine Linearbewegung umzusetzen.

Das Besondere an dem erfindungsgemäßen Spindelantrieb 1 ist der Umstand, dass zwischen einer Antriebswelle des Antriebsmotors 3 und der Gewindespindel 4 ein Rücklaufsperrgetriebe 6 angeordnet ist, und ist weiterhin der Aufbau dieses Rücklaufsperrgetriebes 6.

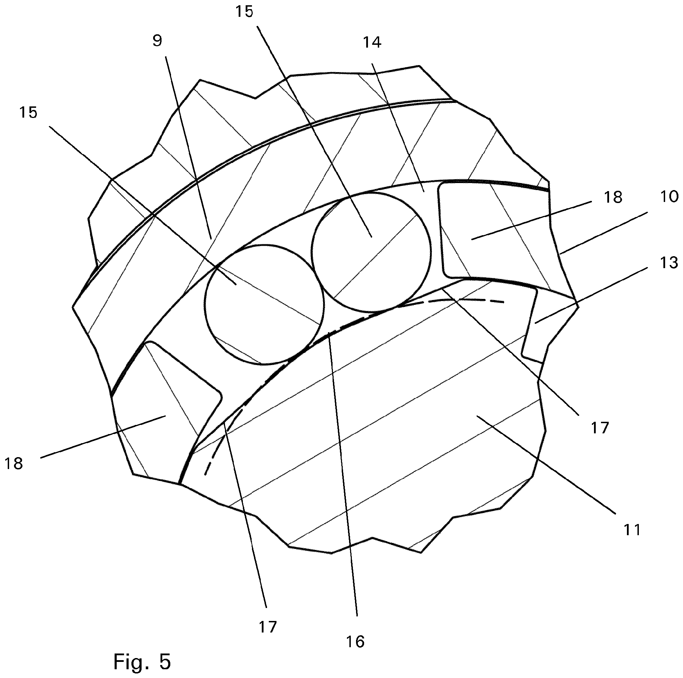

Das Rücklaufsperrgetriebe 6 ist in den Figuren 4 und 5 genauer zu erkennen. Es weist als eine äußere Einfassung eine Lagerhülse 9 auf, die eine Innenfläche mit einem kreisförmigen Querschnitt hat. In der Lagerhülse 9 angeordnet und mit einer mit korrespondierendem Durchmesser gebildeten kreisförmigen Außenfläche an der Innenfläche der Lagerhülse 9 gleitend verdrehbar ist ein Antriebselement 10, dass mit einer Antriebswelle des Antriebsmotors 3 gekoppelt ist und von dem Antriebsmotor 3 angetrieben wird. Das Antriebselement 10 rotiert, wenn es von dem Antriebsmotor 3 angetrieben wird, um eine Rotationsachse, die mit einer Mittellängsachse der Lagerhülse 9 zusammenfällt. Diese Rotationsachse ist auch zentrale Achse eines Abtriebselements 11, das (abgesehen von einer nicht kreisförmigen Oberfläche) konzentrisch zu dem und innerhalb des Antriebselements 10 angeordnet ist. Das Abtriebselement 11 ist in diesem Ausführungsbeispiel integraler Bestandteil der Gewindespindel 4, kann aber auch losgelöst von dieser gebildet und über zum Beispiel weitere Getriebeelemente zum Übertragen eines rotatorischen Antriebs auf die Gewindespindel 4 mit dieser verbunden sein.

An dem Antriebselement 10 sind, an drei äquidistant zueinander entlang des Umfangs verteilten Positionen, radial nach innen ragende Mitnehmervorsprünge 12 angeformt. Diese Mitnehmervorsprünge 12 ragen in Mitnehmernuten 13 hinein und bewirken so eine Kopplung zwischen dem Antriebselement 10 und dem Abtriebselement 11. Die Mitnehmervorsprünge 12 haben in der Umfangsrichtung gesehen eine geringere Breite als die Nutenbreiten der Mitnehmernuten 13 in dieser Richtung. Dies ermöglicht eine relative Verdrehung zwischen Antriebselement 10 und Abtriebselement 11 um einen Winkelbereich, der durch das Übermaß der Nutenbreiten der Mitnehmernuten 13 bestimmt ist. Mitnehmervorsprünge 12 und Mitnehmernuten 13 sind dabei so angeordnet und gestaltet, dass in einer rechtsgedrehten Anschlagsposition alle Mitnehmervorsprünge an einer in Umlaufrichtung rechts liegenden Seitenwand der jeweils zugeordneten Mitnehmernut 13 anschlagen, in einer links gerichteten Anschlagposition die Mitnehmervorsprünge 12 an einer links orientierten Seitenwand der jeweiligen Mitnehmernut 13 anschlagen.

In Bereichen zwischen den Mitnehmervorsprüngen 12 sind in dem Antriebselement 10 Ausschnitte 14 vorgesehen, in denen jeweils zwei Wälzkörper 15 angeordnet sind.

Insbesondere in Figur 5 ist zu erkennen, dass in einem von dem Ausschnitt 14 überstrichenen Bereich der Oberfläche des Abtriebselement 11 diese Oberfläche in einem mittleren Abschnitt 16 einen im Querschnitt kreisförmigen Verlauf aufweist, der konzentrisch ist zu dem Verlauf der Innenfläche der Lagerhülse 9. Hier weist also die Oberfläche des Abtriebselements 11 einen konstanten Abstand zu der Innenfläche der Lagerhülse 9 auf. In äußeren Abschnitten 17 hingegen ist, was die hier fortgeführte gestrichelte Linie des kreisförmigen Verlaufs der Oberfläche im mittleren Abschnitt 16 gut erkennen lässt, der Verlauf der Oberfläche von der Kreisform abweichend, insbesondere abgeflacht, also mit größerem Radius, sodass sich dort eine Verringerung des Abstandes von der Oberfläche des Abtriebselement des 11 zu der Innenfläche der Lagerhülse 9 ergibt. Die Wälzkörper 15 haben einen Rolldurchmesser, der im Wesentlichen dem Abstand zwischen der Oberfläche des Abtriebselement 11 und der Innenfläche der Lagerhülse 9 entspricht. Befinden sich also die Wälzkörper 15 in einer wie in Figur 5 für den dort links unten dargestellten Wälzkörper 15 gezeigten Position, so können sie frei zwischen der Oberfläche des Abtriebselement 11 im mittleren Abschnitt 16 und der Innenseite der Lagerhülse 9 abrollen bzw. gleiten, sodass sich die Kombination aus Antriebselement 10 und Abtriebselement 11 frei relativ zu der Lagerhülse 9 verdrehen und damit rotierend bewegen kann. Gerät jedoch einer der Wälzkörper in Richtung eines der äußeren Abschnitte 17, wie dies in Figur 5 für den rechts oben dargestellten Wälzkörper 15 der Fall ist, so bewirkt dies ein Verkeilen des Wälzkörpers 15 zwischen Abtriebselement 11 und Lagerhülse 9, sodass das Abtriebselement 11 nicht mehr weiter gegenüber der Lagerhülse 9 verdreht werden kann, blockiert ist.

Das Antriebselement 10 weist angrenzend an die Mitnehmervorsprünge 12 jeweils zu beiden Seiten sich erstreckende Steuerleisten 18 auf, mit denen es den Ausschnitt 14 begrenzt und je nach relativer Drehposition zwischen Antriebselement 10 und Abtriebselement 11 weiter oder weniger weit in den von dem Ausschnitt 14 überstrichenen Bereich der Oberfläche des Abtriebselements 11 hineinragt. Die Steuerleisten 18 und die äußeren Abschnitte 17 und das Übermaß der Nutenbreite der Mitnehmernuten 13 gegenüber der Breite der Mitnehmervorsprünge 12 sind dabei so auf einander abgestimmt, dass, wenn durch Rotation des Antriebselements 10 in eine Richtung (mit oder gegen den Uhrzeigersinn) die Mitnehmervorsprünge 12 an den jeweils in der Vortriebsrichtung gesehen vorn liegenden Seitenflächen der Mitnehmernuten 13 anschlagen und damit das Abtriebselement 11 mitnehmen, die in Rotationsrichtung gesehen vorn liegenden Steuerleisten 18 des Antriebselements 10 den in Rotationsrichtung gesehen jeweils hinten liegenden äußeren Abschnitt 17 überdecken, den dort angelagerte Wälzkörper 15 also aus diesem Abschnitt herausdrücken und die beiden Wälzkörper 15, die dann beide im mittleren Abschnitt 16 laufen, vor sich her treiben, ohne dass diese hier zu einer Blockade führen. Gleiches gilt in analoger Weise bei einem Antrieb in umgekehrter Richtung.

Wird der Antrieb nun gestoppt und lastet dann auf dem Abtriebselement 11 eine Rückstellkraft bzw. ein Rückstellmoment, so verdreht sich zunächst das Abtriebselement 11 in der dem Antrieb entgegengesetzten Richtung relativ zu dem Antriebselement 10, bis die zuvor die äußeren Abschnitte 17 überdeckenden Steuerleisten 18 diese äußeren Abschnitte 17 freigeben. Dabei geraten die zuvor in der Rotationsrichtung hinten gelegene Wälzkörper 15 in diese nun frei gewordenen äußeren Abschnitte 17 und kommt es zu einer wie oben beschriebenen Verkeilung zwischen Abtriebselement 11 und Lagerhülse 9, sodass ein weiterer Rücklauf der Gewindespindel 4 dadurch gesperrt ist, ohne dass dadurch das Antriebselement 10 etwa mitgenommen werden würde oder eine Last in Richtung des Antriebsmotor übertragen würde bzw. diese Last abfangen müsste. Dies wird auch dadurch bedingt, dass in einer solchen Keilsituation die Mitnehmervorsprünge 12 noch nicht an der in der vorherigen Rotationsrichtung beim Antreiben nachlaufenden Seitenfläche der Mitnehmernuten 13 anschlagen, sondern frei in den Mitnehmernuten 13 liegen.

Für den Fall, dass nun wieder ein Antrieb erfolgen soll, kann dies in beide Richtungen geschehen, da das Antriebselement 10 bewegt werden kann und mit den jeweiligen Steuerleisten 18 die äußeren Abschnitte 17, in denen die Wälzkörper 15 verkeilend gelegen haben, überdeckt und die Wälzkörper 15 aus diesen Abschnitten heraus drückt.

Das Besondere an dem wie vorstehend beschriebenen Rücklaufsperrgetriebe 6 besteht auch darin, dass es frei von zusätzlichen beweglichen Steuerteilen und auch von Federn oder anderen Spannelementen ist und damit einfach mit wenigen Teilen aufgebaut und robust und langlebig in der Funktion. Die Rücklaufsperrwirkung ist gleichwohl zuverlässig und kann erhebliche Kräfte aufnehmen, insbesondere dadurch, dass in den äußeren Abschnitten 17 der Abstand zwischen der Oberfläche des Abtriebselement 11 und der Innenfläche der Lagerhülse 9 sich keilförmig verringert und damit eine entsprechende Klemmwirkung bei stärkeren angreifenden Kräften und Momenten in einer Rücklaufrichtung sich weiter verstärkt.

Der Einsatz eines solchen Rücklaufsperrgetriebes erlaubt es, kleiner ausgelegte und ohne eine eigene bzw. ohne eine wesentliche eigene Selbsthemmung versehene Antriebsmotoren 3 zu verwenden und trotzdem eine ausreichende Sperrwirkung gegen Rückstellkräfte bzw. Rückstellmomente zu haben, die auf die Gewindespindel 4 einwirken.

### Bezugszeichenliste

- 1: Spindelantrieb
- 2: Antriebsgehäuse
- 3: Antriebsmotor
- 4: Gewindespindel
- 5: Spindelmutter
- 6: Rücklaufsperrgetriebe
- 7: Einschnitt
- 8: Schlitz
- 9: Lagerhülse
- 10: Antriebselement
- 11: Abtriebselement
- 12: Mitnehmervorsprung
- 13: Mitnehmernut
- 14: Ausschnitt
- 15: Wälzkörper
- 16: mittlerer Abschnitt
- 17: äußerer Abschnitt
- 18: Steuerleiste

## Patentansprüche

1. Spindelantrieb (1), insbesondere zum motorisch getriebenen Bewegen von Lamellenelementen von Lamellenfenstern oder Lamellenklappen, mit
• einer von einem Antriebsmotor (3) rotierend antreibbaren Gewindespindel (4) und
• einer mit der Gewindespindel (4) in Eingriff stehenden, durch Rotation der Gewindespindel (4) axial entlang der Gewindespindel (4) verlagerbaren Spindelmutter (5),
wobei ein zwischen einer Antriebswelle des Antriebsmotors (3) und der Gewindespindel (4) angeordneten Rücklaufsperrgetriebe (6) mit
• einem Antriebselement (10) und
• einem Abtriebselement (11),
• wobei Antriebselement (10) und Abtriebselement (11) konzentrisch zu einer Rotationsachse und um diese Rotationsachse relativ zueinander um einen Winkelbereich verdrehbar innerhalb einer diese beiden Elemente (10, 11) umgebenden, eine in einer senkrecht zu der Rotationsachse liegenden Schnittebene einen kreisförmigen Querschnitt aufweisende Innenfläche aufweisenden, ebenfalls zu der Rotationsachse konzentrisch angeordneten Führung (9) angeordnet sind,
• wobei an einem ersten der Elemente Antriebselement (10) und Abtriebselement (11) wenigstens ein radial vorstehender Mitnehmervorsprung (12) ausgebildet ist,
• wobei in einem zweiten der Elemente Antriebselement (10) und Abtriebselement (11) eine Mitnehmernut (13) vorgesehen ist,
• wobei der Mitnehmervorsprung (12) in die Mitnehmernut (13) hinein-ragt,
• wobei die Mitnehmernut (13) in einer auf die Rotationsachse bezogenen Umfangsrichtung gesehen eine Nutenbreite aufweist, die um ein erstes Maß größer ist als eine Breite des Mitnehmervorsprungs (12) in der Umfangsrichtung,
• wobei in dem den Mitnehmervorsprung (12) aufweisenden Element (10, 11) wenigstens ein Ausschnitt (14) vorgesehen ist, in dem wenigstens ein Wälzkörper (15) angeordnet ist, das in dem Ausschnitt (14) zwischen der Innenfläche der Führung (9) und einer Oberfläche des die Mitnehmernut (13) aufweisenden Elements (11) angeordnet liegt,
• wobei das den Mitnehmervorsprung (12) aufweisende Element (10) von dem Mitnehmervorsprung (12) bis zu einem dem Mitnehmervorsprung (12) entlang der Umfangsrichtung zugewandten Rand des Ausschnitts (14) eine ein zweites Maß betragende Erstreckung aufweist, **dadurch gekennzeichnet,**
• **dass** die Oberfläche des die Mitnehmernut (13) aufweisenden Elements (11) in einem von dem Ausschnitt (14) überstrichenen Bereich in einem mittleren Abschnitt (16) in einer Ebene quer zu der Rotationsachse einen kreisabschnittförmigen und zu dem Verlauf der Innenfläche konzentrischen Verlauf aufweist und dort einen konstanten ersten Abstand zu der Innenfläche aufweist und
• **dass** die Oberfläche des die Mitnehmernut (13) aufweisenden Elements (11) in dem von dem Ausschnitt (14) überstrichenen Bereich in Umfangsrichtung gesehen jeweils zu den Seiten des mittleren Abschnitts (16) gelegene, äußere Abschnitte (17) aufweist, in denen die Oberfläche des die Mitnehmernut (13) aufweisenden Elements (11) von dem kreisförmigen Verlauf abweicht und einen zweiten Abstand zu der Innenfläche aufweist, der geringer ist als der erste Abstand,
• **dass** die Wälzkörper(1 5) einen Rolldurchmesser aufweisen, der kleiner als oder genau so groß wie der erste Abstand, jedoch größer als der zweite Abstand ist,
• und **dass** das zweite Maß derart gewählt ist, dass das den Mitnehmervorsprung (12) aufweisende Element (10), wenn der Mitnehmervorsprung (12) an einer dem Rand des Ausschnitts (14) zugewandten Seitenfläche der Mitnehmernut (13) anschlägt, den zu dieser Seitenfläche hin gelegenen äußeren Abschnitt (17) überdeckt.

2. Spindelantrieb (1) nach Anspruch 1, **dadurch gekennzeichnet, dass** in den äußeren Abschnitten (17) der zweite Abstand mit zunehmender Entfernung vom mittleren Abschnitt abnimmt.

3. Spindelantrieb (1) nach einem der vorhergehenden Ansprüche, **dadurch gekennzeichnet, dass** an dem Antriebselement (10) und dem Abtriebselement (11) an wenigstens zwei, insbesondere an genau drei, in der Umfangsrichtung versetzten Positionen an dem ersten der Elemente (10) radial vorstehende Mitnehmervorsprünge (12) und an dem zweiten der Elemente (11) Mitnehmernuten (13) ausgebildet sind, wobei jeweils die Mitnehmervorsprünge (12) und Mitnehmernuten (13) je gleiche Abmessungen aufweisen und so gestaltet sind, dass in einer ersten relativen Drehposition der beiden Elemente Antriebselement (10) und Abtriebselement (11) alle Mitnehmervorsprünge (12) an ersten, im Drehsinn links gelegenen Seitenfläche der korrespondierenden Mitnehmernuten (13) anschlagen und in einer zweiten, von der ersten verschiedenen relativen Drehposition der beiden Elemente Antriebselement (10) und Abtriebselement (11) alle Mitnehmervorsprünge (12) an zweiten, im Drehsinn rechts gelegenen Seitenflächen der korrespondierenden Mitnehmernuten (13) anschlagen, wobei in dem Bereichen zwischen den Mitnehmervorsprüngen (12) in dem die Mitnehmervorsprünge (12) aufweisenden Element (10) je ein Ausschnitt (14) mit den in Anspruch 1 bestimmten Merkmalen vorgesehen ist und in jedem der Ausschnitte (14) wenigstens ein Wälzkörper (15) angeordnet ist.

4. Spindelantrieb (1) nach einem der vorhergehenden Ansprüche, **dadurch gekennzeichnet, dass** in dem wenigstens einen Ausschnitt (14) mehrere, insbesondere zwei, Wälzkörper(15) vorgesehen sind, die in der Umfangsrichtung gesehen nebeneinander angeordnet sind.

5. Spindelantrieb (1) nach einem der vorhergehenden Ansprüche, **dadurch gekennzeichnet, dass** die Gewindespindel (4) mit dem Abtriebselement (11) fest verbunden, insbesondere einstückig ausgebildet, ist und im angetriebenen Zustand um die Rotationsachse rotiert.

6. Spindelantrieb (1) nach einem der vorhergehenden Ansprüche, **dadurch gekennzeichnet, dass** der von dem Ausschnitt (14) überstrichene Bereich der Oberfläche des die Mitnehmernut (13) aufweisenden Elements (11) in einer senkrecht zu der Rotationsachse stehenden Querschnittsebene gesehen eine zu einer Mittelachse symmetrische Form aufweist.

7. Lamellenfenster oder Lamellenklappe mit in einem gemeinsamen Rahmen um parallele Drehachsen verdrehbar angeordneten Lamellenelementen und einem ein mit den Lamellenelementen zur Umsetzung einer Längsbewegung in Drehbewegungen der Lamellenelement um deren Drehachsen verbundenes Schubelement aufweisenden Antriebsgetriebe, **dadurch gekennzeichnet, dass** das Lamellenfenster oder die Lamellenklappe einen Spindelantrieb (1) nach einem der Ansprüche 1 bis 6 aufweist, dessen Spindelmutter (4) zum Antreiben des Schubelements mit dem Schubelement gekoppelt ist.

## Claims

1. A spindle drive (1), in particular for the motor-driven movement of louvre elements of louvre windows or louvre flaps, having
- a threaded spindle (4) which can be driven in rotation by a drive motor (3) and
• a spindle nut (5) engaged with the threaded spindle (4) and axially displaceable along the threaded spindle (4) by rotation of the threaded spindle (4), wherein a backstop gear (6) arranged between a drive shaft of the drive motor (3) and the threaded spindle (4) with
• a drive element (10) and
• a driven element (11),
• wherein the drive element (10) and the driven element (11) are arranged concentrically to an axis of rotation and rotatable relative to each other about this axis of rotation by an angular range within a guide (9) which surrounds these two elements (10, 11), has an inner surface having a circular cross-section in a sectional plane lying perpendicular to the axis of rotation and is also arranged concentrically to the axis of rotation,
• wherein at least one radially projecting driving protrusion (12) is formed on a first of the drive element (10) and driven element (11),
• wherein a driving groove (13) is provided in a second of the drive element (10) and drive element (11),
• wherein the driving protrusion (12) projects into the driving groove (13),
• wherein the driving groove (13) has a groove width, as viewed in a circumferential direction with respect to the axis of rotation, which is greater by a first dimension than a width of the driving protrusion (12) in the circumferential direction,
- wherein at least one cutout (14) is provided in the element (10, 11) having the driving protrusion (12), in which cutout at least one rolling body (15) is arranged, which is arranged in the cutout (14) between the inner surface of the guide (9) and a surface of the element (11) having the driving groove (13),
- the element (10) having the driving protrusion (12) having an extension of a second dimension from the driving protrusion (12) to an edge of the cutout (14) facing the driving protrusion (12) along the circumferential direction,
**characterised in that**
- the surface of the element (11) having the driving groove (13) in a region swept by the cutout (14) has in a central section (16) in a plane transverse to the axis of rotation a circular section-shaped course concentric to the course of the inner surface and there has a constant first distance to the inner surface and
- the surface of the element (11) whose driving groove (13) in the region is swept by the cutout (14) has, viewed in the circumferential direction, outer portions (17) located respectively on the sides of the central portion (16), in which the surface of the element (11) whose driving groove (13) deviates from the circular course and has a second distance to the inner surface which is smaller than the first distance,
- that the rolling bodies (15) have a rolling diameter that is smaller than or exactly as large as the first pitch but larger than the second pitch,
- and **in that** the second dimension is selected in such a way that the element (10) having the driving protrusion (12), when the driving protrusion (12) abuts against a side surface of the driving groove (13) facing the edge of the cutout (14), covers the outer portion (17) located towards this side surface.

2. A spindle drive (1) according to claim 1, **characterised in that** in the outer sections (17) the second distance decreases with increasing distance from the middle section.

3. A spindle drive (1) according to one of the preceding claims, **characterised in that** radially projecting driving protrusions (12) are formed on the drive element (10) and the driven element (11) at at least two, in particular at exactly three, positions offset in the circumferential direction on the first of the elements (10) and driving grooves (13) are formed on the second of the elements (11), wherein in each case the driving protrusions (12) and driving grooves (13) each have the same dimensions and are designed in such a way that, in a first relative rotational position of the two elements drive element (10) and driven element (11), all driving protrusions (12) are formed on first, left-hand side surfaces of the elements (10) and driven element (11), in a first relative rotational position of the two elements, drive element (10) and driven element (11), all the drive projections (12) strike against first side faces, located on the left in the direction of rotation, of the corresponding driving grooves (13), and in a second relative rotational position, different from the first, of the two elements, drive element (10) and driven element (11), all the driving protrusions (12) strike against second side faces, located on the right in the direction of rotation, of the corresponding driving grooves (13), wherein in the regions between the driving protrusions (12) in the element (10) having the driving protrusions (12) a cutout (14) having the features defined in claim 1 is provided and in each of the cutouts (14) at least one rolling body (15) is arranged.

4. A spindle drive (1) according to one of the preceding claims, **characterised in that** several, in particular two, rolling bodies (15) are provided in the at least one cutout (14), which rolling bodies (5) are arranged next to each other as seen in the circumferential direction.

5. A spindle drive (1) according to one of the preceding claims, **characterised in that** the threaded spindle (4) is fixedly connected, in particular integrally formed, to the driven element (11) and rotates about the axis of rotation in the driven state.

6. A spindle drive (1) according to one of the preceding claims, **characterised in that** the region of the surface of the element (11) having the driving groove (13) which is swept by the cutout (14) has a shape which is symmetrical with respect to a centre axis when viewed in a cross-sectional plane perpendicular to the axis of rotation.

7. A louvre window or louvre flap with louvre elements arranged in a common frame so as to be rotatable about parallel axes of rotation and with a drive gear having a thrust element connected to the louvre elements for converting a longitudinal movement into rotary movements of the louvre element about their axes of rotation, **characterised in that** the louvre window or louvre flap has a spindle drive (1) according to one of the claims 1 to 6, the spindle nut (4) of which is coupled to the thrust element for driving the thrust element.

## Revendications

1. Entraînement à broche (1), en particulier pour le déplacement motorisé d'éléments de lamelles de fenêtres à lamelles ou de volets à lamelles, comportant
• une broche filetée (4) qui peut être entraînée en rotation par un moteur menant (3) et
• un écrou de broche (5) engagé dans la broche filetée (4) et déplaçable axialement le long de la broche filetée (4) par rotation de la broche filetée (4),
dans lequel un engrenage d'antidévireur (6) disposé entre un arbre menant du moteur menant (3) et la broche filetée (4) avec
• un élément menant (10) et
• un élément mené (11),
• dans lequel l'élément menant (10) et l'élément mené (11) sont disposés concentriquement par rapport à un axe de rotation et peuvent tourner l'un par rapport à l'autre autour de cet axe de rotation dans une plage angulaire à l'intérieur d'un guide (9) qui entoure ces deux éléments (10, 11), a une surface intérieure ayant une section transversale circulaire dans un plan de section perpendiculaire à l'axe de rotation et est également disposé concentriquement par rapport à l'axe de rotation,
• dans lequel au moins une projection radiale de la saillie d'entraînement (12) est formée sur un premier de l'élément menant (10) et de l'élément mené (11),
• dans lequel une rainure d'entraînement (13) est prévue dans un second élément de l'élément menant (10) et de l'élément mené (11),
• dans lequel la saillie de la saillie d'entraînement (12) fait saillie dans la rainure d'entraînement (13),
• dans laquelle la rainure d'entraînement (13) a une largeur de rainure, vue dans une direction circonférentielle par rapport à l'axe de rotation, qui est supérieure d'une première dimension à une largeur de la saillie d'entraînement (12) dans la direction circonférentielle,
• dans lequel au moins une découpe (14) est prévue dans l'élément (10, 11) ayant la saillie d'entraînement (12), dans laquelle est disposé au moins un élément roulant (15), qui est disposé dans la découpe (14) entre la surface intérieure du guide (9) et une surface de l'élément (11) présentant la rainure d'entraînement (13),
• l'élément (10) comportant la saillie d'entraînement (12) présentant une extension d'une seconde dimension de la saillie d'entraînement (12) à un bord de la découpe (14) faisant face à la saillie d'entraînement (12) le long de la direction circonférentielle,
**caractérisé en ce que**
• la surface de l'élément (11) comportant la rainure d'entraînement (13) dans une région balayée par la découpe (14) présente dans une section centrale (16) dans un plan transversal à l'axe de rotation un parcours en forme de section circulaire concentrique au parcours de la surface intérieure et présente une première distance constante par rapport à la surface intérieure, et
• la surface de l'élément (11) comportant la rainure d'entraînement (13) dans une région balayée par la découpe (14) présente une première distance constante par rapport à la surface intérieure,
• la surface de l'élément (11) dont la rainure d'entraînement (13) dans la région est balayée par la découpe (14), présente, dans la direction circonférentielle, des parties extérieures (17) situées respectivement sur les côtés de la partie centrale (16), dans lesquelles la surface de l'élément (11) comportant la rainure d'entraînement (13) s'écarte de la trajectoire circulaire et présente une seconde distance par rapport à la surface intérieure qui est inférieure à la première distance,
• les organes de roulement (15) ont un diamètre de roulement inférieur ou exactement égal au premier pas, mais supérieur au second pas,
• et **en ce que** la seconde dimension est choisie de telle sorte que l'élément (10) comportant la saillie d'entraînement (12) recouvre la partie extérieure (17) située vers une surface latérale, lorsque la saillie d'entraînement (12) vient en butée contre ladite surface latérale de la rainure d'entraînement (13) faisant face au bord de la découpe (14), .

2. Entraînement à broche (1) selon la revendication 1, **caractérisé par le fait que** dans les sections extérieures (17), la seconde distance diminue à mesure que l'on s'éloigne de la section centrale.

3. Entraînement à broche (1) selon l'une des revendications précédentes, **caractérisé en ce que** des saillies d'entraînement (12) en saillie radiale sont formées sur l'élément menant (10) et l'élément mené (11) à au moins deux, en particulier à exactement trois, positions décalées dans la direction circonférentielle sur le premier des éléments (10) et des rainures d'entraînement (13) sont formées sur le second des éléments (11), dans lequel les saillies d'entraînement (12) et les rainures menant (13) ont les mêmes dimensions et sont conçues de manière à ce que, dans une première position de rotation relative de l'élément menant (10) et de l'élément mené (11), toutes les saillies d'entraînement (12) soient formées sur les premières surfaces latérales gauches des éléments (10) et de l'élément mené (11), dans une première position de rotation relative des deux éléments, l'élément menant (10) et l'élément mené (11), toutes les saillies d'entraînement (12) frappent contre les premières faces latérales, situées à gauche dans le sens de rotation, des rainures menant correspondantes (13), et dans une deuxième position de rotation relative, différente de la première, des deux éléments, l'élément menant (10) et l'élément mené (11), toutes les saillies d'entraînement (12) frappent contre les premières faces latérales, situées à gauche dans le sens de rotation, des rainures menant correspondantes (13), toutes les saillies d'entraînement (12) frappent contre les secondes faces latérales, situées à droite dans le sens de rotation, des rainures d'entraînement correspondantes (13), dans lequel dans les régions entre les saillies d'entraînement (12) dans l'élément (10) présentant les saillies d'entraînement (12), une découpe (14) ayant les caractéristiques définies dans la revendication 1 est prévue et dans chacune des découpes (14) au moins un organe de roulement (15) est agencé.

4. Entraînement à broche (1) selon l'une des revendications précédentes, **caractérisé en ce que** plusieurs, en particulier deux, organes de roulement (5) sont prévus dans ladite au moins une découpe (14), ces organes de roulement (5) étant disposés les uns à côté des autres dans la direction circonférentielle.

5. Entraînement à broche (1) selon l'une des revendications précédentes, **caractérisé par le fait que** la broche filetée (4) est reliée de manière fixe, en particulier de manière intégrée, à l'élément mené (11) et tourne autour de l'axe de rotation à l'état entraîné.

6. Entraînement à broche (1) selon l'une des revendications précédentes, **caractérisé en ce que** la région de la surface de l'élément (11) comportant la rainure d'entraînement (13) qui est balayée par la découpe (14) a une forme symétrique par rapport à un axe central lorsqu'elle est vue dans un plan de section transversale perpendiculaire à l'axe de rotation.

7. Fenêtre à lamelles ou volet à lamelles avec des éléments à lamelles disposés dans un cadre commun de manière à pouvoir tourner autour d'axes de rotation parallèles et avec un engrenage menant comportant un élément de poussée relié aux éléments à lamelles pour convertir un mouvement longitudinal en mouvements de rotation de l'élément à lamelles autour de leurs axes de rotation, **caractérisé en ce que** la fenêtre à lamelles ou le volet à lamelles comporte un entraînement à broche (1) selon l'une des revendications 1 à 6, dont l'écrou de broche (4) est couplé à l'élément de poussée pour entraîner ledit élément de poussée.
